(19) Europäisches Patentamt
European Patent Office
Office européen des brevets

(11) **EP 3 560 691 A1**

(12) **EUROPEAN PATENT APPLICATION**
published in accordance with Art. 153(4) EPC

(43) Date of publication:
**30.10.2019 Bulletin 2019/44**

(21) Application number: **17882304.3**

(22) Date of filing: **20.12.2017**

(51) Int Cl.:
**B29C 70/04** (2006.01)    **C08J 5/04** (2006.01)

(86) International application number:
**PCT/JP2017/045791**

(87) International publication number:
**WO 2018/117182 (28.06.2018 Gazette 2018/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority:  **22.12.2016   JP 2016248748**

(71) Applicant: **Toray Industries, Inc.**
**Tokyo 103-8666 (JP)**

(72) Inventors:
• **SHINOHARA, Kotaro**
**Iyo-gun**
**Ehime 791-3193 (JP)**
• **TAKEBE, Yoshiki**
**Iyo-gun**
**Ehime 791-3193 (JP)**
• **HONMA, Masato**
**Iyo-gun**
**Ehime 791-3193 (JP)**

(74) Representative: **Mewburn Ellis LLP**
**City Tower**
**40 Basinghall Street**
**London EC2V 5DE (GB)**

(54) **METHOD FOR PRODUCING MACHINED GOODS AND MACHINED GOODS**

(57)    Provided are a processed product obtained by processing a structure having excellent lightness and mechanical characteristics, and a method for manufacturing the processed product that can process with high precision and high productivity. A method for manufacturing a processed product according the present invention is a method comprising processing a structure, the structure containing reinforced fibers, resin, and voids, the structure having a density in a range of 0.01 to 1 $g/cm^3$, the structure having a compression modulus in a range of 0.2 to 20 GPa, and the processing being cutting processing performed by bringing the structure into contact with a processing tool.

## FIG.1

## Description

TECHNICAL FIELD

The present invention relates to a method for manufacturing a processed product by processing a structure containing resin, reinforced fibers, and voids, and to a processed product.

BACKGROUND ART

Recently, members having excellent mechanical characteristics such as lightness and rigidity are being required in an aerospace field, an automobile field, and a sport field. In order to meet such a requirement, used as structures for use in each of the industries are a resin foam that contains voids to satisfy lightness and fiber-reinforced plastic that satisfies lightness and high mechanical characteristics (Patent Document 1). These structures are molded with molds by press molding, extrusion molding, injection molding, or vacuum molding when supplied for use in each of the industries. These structures, however, are regarded as having trouble giving a size and a shape of a desired product without processing, due to difficult molding into a complicated shape, a problem of a dimensional stability caused by thermal contraction, and presence of a protrusion (burr) at an end of the structure generated during molding. Thus, a structure is generally prepared that is larger than a desired shape, and is subjected to two-dimensional or three-dimensional processing such as grinding, cutting, or drilling to give a product.

Therefore, a structure is required that not only satisfies lightness and high mechanical characteristics but also has excellent processability. A resin foam having excellent lightness contains soft resin not to allow fine processing for, for example, a fine rib, a fine hole, or a fine groove. Thus, in order to improve the processability of soft resin, studied is preparing the blending ratio of resin to increase hardness of the resin foam (Patent Document 2). The resin foam, however, has inferior mechanical characteristics as the structure in the first place to limit its use application to, for example, utilization as a core material. On the other hand, a fiber-reinforced plastic having excellent mechanical characteristics often generates cracking and peeling on front and rear surfaces of an edge portion by vibration or a fragment during processing. In order to suppress these inconveniences, studied are the type and the composition of resin and fibers (Patent Document 3). The fiber-reinforced plastic, however, has excessively high strength and rigidity to accelerate wear of a processing tool and thus decrease the life of the processing tool. Under the circumstances described above, an urgent need is to provide a processed product obtained by processing a structure that has excellent lightness and mechanical characteristics and also has excellent processability.

PRIOR ART DOCUMENTS

PATENT DOCUMENTS

Patent Document 1: WO 2014/162873
Patent Document 2: Japanese Patent Laid-open Publication No. 2002-338722
Patent Document 3: Japanese Patent No. 5908188

SUMMARY OF THE INVENTION

PROBLEMS TO BE SOLVED BY THE INVENTION

The present invention has been made in view of the above problems, and an object of the present invention is to provide a processed product obtained by processing a structure having excellent lightness and mechanical characteristics and having excellent processability, and a method for manufacturing the processed product.

SOLUTIONS TO THE PROBLEMS

A method for manufacturing a processed product according to the present invention is the following (1) or (2). Hereinafter, the invention described in (1) is referred to as a first embodiment of the present invention, the invention described in (2) is referred to as a second embodiment of the present invention, and the first and second embodiments of the present invention are collectively referred to as the present invention.

(1) A method for manufacturing a processed product, the method including processing a structure,

the structure containing reinforced fibers, resin, and voids,
the structure having a density in a range of 0.01 to 1 g/cm$^3$,
the structure having a compression modulus in a range of 0.2 to 20 GPa, and
the processing being cutting processing performed by bringing the structure into contact with a processing tool.
(2) A method for manufacturing a processed product, the method including processing a structure,
the structure containing reinforced fibers, resin, and voids,
the structure having a density in a range of 0.01 to 1 g/cm$^3$,
the structure having a specific heat in a range of 0.05 to 0.50 cal/(g·K), and
the processing being fusing processing performed by fusing the structure.

A processed product according to the present invention is a processed product obtained by processing a structure,
the structure containing reinforced fibers, resin, and voids,
the structure having a volume content of the reinforced fibers in a range of 0.5 vol% or more and 55 vol% or less and a volume content of the voids in a range of 10 vol% or more and 97 vol% or less, and
the processed product including a processed end surface that contains the reinforced fibers and the resin and has a surface roughness (Rz) in a range of 5 μm or more and 50 μm or less.

EFFECTS OF THE INVENTION

According to the method for manufacturing a processed product according to the present invention, it is possible to provide a method for manufacture a processed product that enables manufacturing of a processed product having excellent rigidity and lightness by fine cutting or/and fusing processing and that is less likely to wear a tool.

BRIEF DESCRIPTION OF THE DRAWINGS

Fig. 1 is a schematic view showing a sectional configuration of a structure of the present invention.
Fig. 2 is schematic views showing one exemplary dispersion state of reinforced fibers in the structure of the present invention.
Fig. 3 is a schematic view showing one exemplary processed product according to the present invention.
Fig. 4 is a schematic view showing one exemplary device for manufacturing a fiber-reinforced mat of the present invention.

EMBODIMENTS OF THE INVENTION

First described is a structure to be processed in the method for manufacturing a processed product according to the present invention.

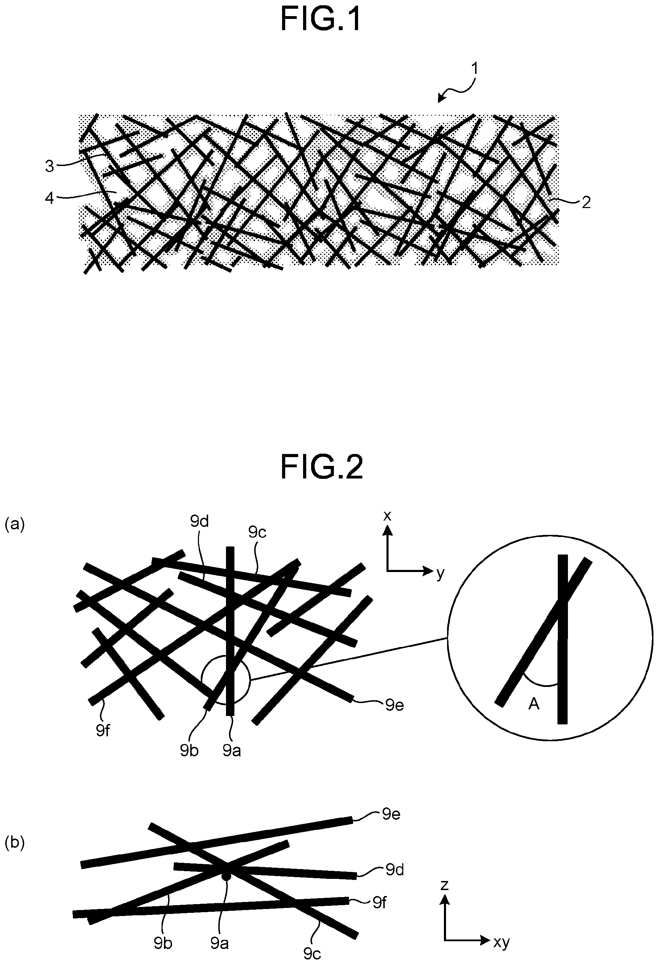

Fig. 1 is a schematic view showing a sectional configuration of a structure 1 of the present invention. As shown in Fig. 1, the structure 1 of the present invention contains resin 2, reinforced fibers 3, and voids 4.
Here, exemplified as the resin 2 are thermoplastic and thermoset resin. In the present invention, thermoset resin may be blended with thermoplastic. Examples of thermoplastic used as the resin 2 in the present invention include crystalline resin such as polyesters (e.g., polyethylene terephthalate (PET), polybutylene terephthalate (PBT), polytrimethylene terephthalate (PTT), polyethylene naphthalate (PEN), and liquid crystal polyester), polyolefins (e.g., polyethylene (PE), polypropylene (PP), and polybutylene), polyoxymethylene (POM), polyamide (PA), polyarylene sulfides (e.g., polyphenylene sulfide (PPS)), polyketone (PK), polyetherketone (PEK), polyetheretherketone (PEEK), polyetherketoneketone (PEKK), polyether nitrile (PEN), fluorine-based resin (e.g., polytetrafluoroethylene), and liquid crystal polymer (LCP); amorphous resin such as styrene-based resin as well as polycarbonate (PC), polymethylmethacrylate (PMMA), polyvinylchloride (PVC), polyphenylene ether (PPE), polyimide (PI), polyamideimide (PAI), polyetherimide (PEI), polysulfone (PSU), polyethersulfone, and polyarylate (PAR); other materials such as phenolic resin, phenoxy resin, polystyrene-based, polyolefin-based, polyurethane-based, polyester-based, polyamide-based, polybutadiene-based, polyisoprene-based, or fluorine-based resin, and thermoplastic elastomers (e.g., acrylonitrile-based); and thermoplastic selected from copolymers and modified products of these types of resin. Among these types of thermoplastic, polyolefin is preferable from a viewpoint of lightness of the structure obtained, polyamide is preferable from a viewpoint of strength, amorphous resin such as polycarbonate and styrene-based resin is preferable from a viewpoint of surface appearance, polyarylene sulfide is preferable from a viewpoint of heat resistance, polyetheretherketone is preferable from a viewpoint of continuous use temperature, and fluorine-based resin is preferably used from a viewpoint of chemical resistance.

Examples of thermoset resin used as the resin 2 in the present invention include unsaturated polyester, vinyl ester, epoxy resin, phenolic resin, urea resin, melamine resin, thermoset polyimide, copolymers and modified products of these types of resin, and blended resin of at least two of these types of resin.

The resin 2 may contain an impact resistance improver such as elastomer or a rubber component, or another filler or additive agent in a range without impairing the objects of the present invention. Examples of the filler and the additive agent include an inorganic filler, a flame retardant, a conductivity imparting agent, a nucleating agent, an ultraviolet absorbing agent, an antioxidant, a damping agent, an antibacterial agent, a bug repellent, a deodorant, a coloring inhibitor, a thermostabilizer, a mold release agent, an antistatic agent, a plasticizer, a lubricant, a coloring agent, a pigment, a dye, a foaming agent, a defoamer, and a coupling agent.

The structure 1 of the present invention preferably has a volume content of the reinforced fibers 3 of 0.5 vol% or more and 55 vol% or less, a volume content of the resin 2 of 2.5 vol% or more and 85 vol% or less, and a volume content of the voids 4 of 10 vol% or more and 97 vol% or less, with the entire volume of the structure 1 defined as 100 vol%. That is, the volume content of the resin 2 in the structure 1 is preferably 2.5 vol% or more and 85 vol% or less. The structure 1 having a volume content of the resin 2 of less than 2.5 vol% is not preferable because it does not allow the reinforced fibers 3 in the structure 1 to be bound with each other to be incapable of making a reinforcing effect of the reinforced fibers 3 sufficient and thus satisfying mechanical properties, particularly a flexural property of the structure 1. On the other hand, the structure 1 having a volume content of the resin 2 of more than 85 vol% is not preferable because it has trouble having a void configuration for its excessively large amount of resin.

Examples of the reinforced fibers 3 include metal fibers such as aluminum, brass, and stainless steel, PAN-based, rayon-based, lignin-based, or PITCH-based carbon fibers, graphite fibers, insulating fibers such as glass, organic fibers such as aramid, PBO, polyphenylenesulfide, polyester, acrylic, nylon, and polyethylene, and inorganic fibers such as silicon carbide and silicon nitride. The first and second reinforced fibers may be those obtained by surface-treating these types of fibers. Examples of the surface treatment include, in addition to a treatment of depositing a metal as a conductor, a treatment with a coupling agent, a treatment with a sizing agent, a treatment with a banding agent, and a treatment of attaching an additive agent. These types of fibers may be used alone, or two or more types of fibers may be used in combination. Among these types of fibers, PAN-based, PITCH-based, or rayon-based carbon fibers that are excellent in specific strength and specific rigidity are preferably used from a viewpoint of an effect of reducing weight. PAN-based, PITCH-based, or rayon-based carbon fibers or metal fibers are preferable from a viewpoint of improving thermal conductivity not to allow heat to stay in the structure during processing. Further, glass fibers are preferably used from a viewpoint of increasing economic efficiency of the structure 1 obtained, and particularly, carbon fibers and glass fibers are preferably used in combination in terms of balance between the mechanical properties and the economic efficiency. Further, aramid fibers are preferably used from a viewpoint of increasing an impact absorbing property and formativeness of the structure 1 obtained, and particularly, carbon fibers and aramid fibers are preferably used in combination in terms of balance between the mechanical properties and the impact absorbing property. Further, it is also possible to use reinforced fibers coated with a metal such as nickel, copper, or ytterbium from a viewpoint of increasing conductivity of the structure 1 obtained. Among these types of fibers, it is possible to more preferably use PAN-based carbon fibers excellent in mechanical properties such as strength and elastic modulus.

The reinforced fibers 3 may have a form of either continuous reinforced fibers having about the same length as the structure 1 or finite-length discontinuous reinforced fibers cut at a prescribed length. The reinforced fibers 3, however, are preferably discontinuous reinforced fibers from a viewpoint of enabling easy impregnation with the resin 2 and easy adjustment of the impregnation amount.

The reinforced fibers 3 are desirably discontinuous and dispersed in nearly monofilaments and randomly in the structure 1. The reinforced fibers 3 having such an aspect facilitate formation of a sheet-shaped precursor of the structure 1 or the structure 1 into a complicated shape when an external force is applied to the precursor or the structure 1 for molding. The reinforced fibers 3 dispersed in nearly monofilaments and randomly densify the voids 4 formed by the reinforced fibers 3 to enable stable processing.

Here, the phrase "in nearly monofilaments" refer to existing as fine-denier strands having less than 500 reinforced fiber single yarns. The reinforced fibers are further desirably dispersed in monofilaments, that is, in single yarns.

The phrase "dispersed in nearly monofilaments or in monofilaments" refers to a state in which any reinforced fibers 3 selected in the structure 1 have a proportion of single filaments of 80% or more, the single filaments having a two-dimensional contact angle of 1° or more (hereinafter, also referred to as a fibers dispersed rate), in other words, refers to a state in which the structure 1 has a proportion of bundles of less than 20%, the bundles including two or more single filaments in contact and in parallel with each other. Accordingly, the fiber reinforced fibers 3 are particularly preferable in which at least the mass fraction of fiber bundles including 100 or less filaments corresponds to 100%.

Further, the reinforced fibers 3 are particularly desirably dispersed randomly. The phrase "the reinforced fibers 3 are dispersed randomly" refers to a state in which any reinforced fibers 3 selected in the structure 1 have an arithmetic average value of a two-dimensional orientation angle in a range of 30° or more and 60° or less. The two-dimensional orientation angle refers to an angle between one single filament and another single filament crossing with the one single filament of the reinforced fibers 3 and is defined as an acute angle in a range of 0° or more and 90° or less among angles between the single filaments crossing with each other.

The two-dimensional orientation angle is further described with reference to drawings. Fig. 2 is schematic views showing one exemplary dispersion state of the reinforced fibers 3 in the structure 1 of the present invention, with Fig. 2(a) showing a plane-wise view and Fig. 2(b) showing a thickness-wise view. In Figs 2(a) and 2(b), a single filament 9a, which is used as a base, crosses with other single filaments 9b to 9f. Here, the crossing means a state in which a base single filament is observed to cross with another single filament on an observed two-dimensional plane, does not necessarily require contact between the single filament 9a and the single filaments 9b to 9f, and does not exclude a state in which a base single filament is observed to cross with another single filament in projection. That is, as regards the base single filament 9a, all the single filaments 9b to 9f are objects to be evaluated for the two-dimensional orientation angle. In Fig. 2(a), the two-dimensional orientation angle is, of two angles between the two single filaments crossing with each other, an acute angle A in the range of 0° or more and 90° or less.

A method for measuring the two-dimensional orientation angle is not particularly limited. For example, exemplified is a method for observing the orientation of the reinforced fibers 3 from a surface of a constituent element, and it is possible to employ the same means as the method for measuring the two-dimensional contact angle described above. An average value of the two-dimensional orientation angle is measured by the following procedures. That is, an average value of two-dimensional orientation angles is measured, the two-dimensional orientation angles being formed between an arbitrarily selected single filament (single filament 9a in Fig. 2) and all single filaments (single filaments 9b to 9f in Fig. 2) crossing with the selected single filament. For example, when one single filament crosses with many other single filaments, an arithmetic average value may be alternatively used that is obtained from measured values of 20 single filaments arbitrarily selected from the other crossing single filaments. This measurement is repeated a total of 5 times with other single filaments used as bases, and an arithmetic average value of the measurements is calculated as an arithmetic average value of the two-dimensional orientation angle.

The reinforced fibers 3 are dispersed in nearly monofilaments and randomly to be capable of maximally increasing the performance imparted by the reinforced fibers 3 dispersed in nearly monofilaments described above. The reinforced fibers 3 dispersed in such a manner are also capable of giving isotropy to the mechanical properties of the structure 1. From such viewpoints, the reinforced fibers 3 desirably have a fibers dispersed rate of 90% or more and are more desirable according as they have fibers dispersed rate close to 100%. The reinforced fibers 3 desirably have an arithmetic average value of the two-dimensional orientation angle in a range of 40° or more and 50° or less and are more desirable according as the arithmetic average value is close to 45° as an ideal angle.

As described above, the structure 1 preferably has a volume content of the reinforced fibers 3 in the range of 0.5 vol% or more and 55 vol% or less. The structure 1 having a volume content of the reinforced fibers 3 of less than 0.5 is not preferable because it is incapable of making the reinforcing effect derived from the reinforced fibers 3 sufficient. On the other hand, the structure 1 having a volume content of the reinforced fibers 3 of more than 55 vol% is not preferable because it relatively decreases the volume content of the resin 2 with respect to the volume content of the reinforced fibers 3 and does not allow the reinforced fibers 3 in the structure 1 to be bound with each other to be incapable of making the reinforcing effect of the reinforced fibers 3 sufficient and thus satisfying the mechanical properties, particularly the flexural property of the structure 1. The structure 1 having a volume content of the reinforced fibers 3 of more than 55 vol% is not preferable because it not only has trouble being cut for high strength and rigidity of the reinforced fibers 3 but also accelerates wear of a cutting tool during cutting processing to shorten the life of the tool.

In the structure 1, the reinforced fibers 3 are coated with the resin 2 and the resin 2 coating the reinforced fibers 3 preferably has a coating thickness in a range of 1 $\mu$m or more and 15 $\mu$m or less. As a coat state of the reinforced fibers 3 coated with the resin 2, coating at least a crossing point of single filaments of the reinforced fibers 3 contained in the structure 1 is sufficient from viewpoints of shape stability, easy control of the thickness, and the degree of freedom of the structure 1. As a further preferable aspect, however, the resin 2 preferably gives a coat state of coating the periphery of the reinforced fibers 3 at a coating thickness of 1 $\mu$m or more and 15 $\mu$m or less. This state means a state in which the reinforced fibers 3 have surfaces thereof unexposed due to the resin 2, in other words, a state in which the reinforced fibers 3 have a wire-shaped coating film formed thereon by the resin 2. This makes the structure 1 have shape stability and sufficiently exert the mechanical properties and further enables the structure 1 to efficiently disperse heat in the resin 2 generated and accumulated during processing through thermal conduction of the reinforced fibers, to improve cutting processability of the structure. As a coat state of the reinforced fibers 3 coated with the resin 2, the reinforced fibers 3 are not necessarily entirely coated, and the coating may be attained in a range without impairing the shape stability, the compression modulus, the flexural modulus, and the flexural strength of the structure 1. That is, in the present invention, the reinforced fibers 3 in the structure 1 preferably have at least a part thereof coated with the resin 2 and at least include a part thereof coated with the resin 2 having a coating thickness in the range of 1 $\mu$m or more and 15 $\mu$m or less.

The reinforced fibers 3 in the structure 1 preferably have a mass average fiber length in a range of 1 mm or more and 15 mm or less. This condition is capable of increasing reinforcing efficiency of the reinforced fibers 3 and imparting excellent mechanical properties to the structure 1. Setting the mass average fiber length of the reinforced fibers 3 in the above range is preferable because it not only improves the mechanical properties of the structure 1 but also enables the structure 1 to efficiently disperse heat generated and accumulated in the resin 2 during processing through the reinforced fibers 3. It is possible to calculate the mass average fiber length as an average length of 400 reinforced fibers that are arbitrarily selected from the reinforced fibers 3 left after removal of a resin 2 component in the structure 1 by a method such as burning or elution and that are measured down to a unit of 10 $\mu$m.

The structure 1 of the present invention contains the voids 4. Here, the voids 4 in the present invention refer to spaces formed by resin 2-coated reinforced fibers 3 being columnar supporting bodies and overlapping or crossing with each other. For example, when the reinforced fibers 3 are impregnated with the resin 2 in advance to form a structure precursor and the structure precursor is heated to give the structure 1, melting or softening of the resin 2 by the heating raises the reinforced fibers 3 to form the voids 4. This phenomenon is based on the reinforced fibers 3' character of rising by a rising force derived from the elastic modulus of the reinforced fibers that have been compressed by pressure in the structure precursor.

The voids 4 may each have an independent space to have a form of a closed-cell foam or may be connected to each other to have a form of an open-cell foam. In cases of the form of an open-cell foam, continuous voids are capable of storing a liquid therein to improve water absorbency of the structure 1. Cutting processing is preferable that is performed while the open-cell foam is used as the structure 1 and the voids in the structure 1 are allowed to store a liquid cooling medium, because it enables performance of processing while cooling heat generated during the cutting by the cooling medium, so that processing precision is improved.

As described above, the structure 1 preferably has a volume content of the voids 4 of 10 vol% or more and 97 vol% or less. The structure 1 having a volume content of the voids 4 of less than 10 vol% is not preferable because it increases its density to be incapable of satisfying the lightness. On the other hand, the structure 1 having a volume content of the voids 4 of more than 97 vol% is not preferable because it reduces the thickness of the resin 2 coating the periphery of the reinforced fibers 3 and thus makes mutual reinforcement of the reinforced fibers 3 in the structure 1 insufficient to decrease the mechanical properties. The structure 1 preferably has a volume content of the voids 4 of 97 vol% as an upper limit value. As regards the volume content in the present invention, a total of the volume contents of the resin 2, the reinforced fibers 3, and the voids 4 contained in the structure 1 is defined as 100 vol%.

The structure 1 of the present invention preferably has a specific flexural rigidity in a range of 3 or more and 20 or less, the specific flexural rigidity being represented by $Ec^{1/3} \cdot \rho^{-1}$ with the flexural modulus defined as Ec and the density defined as $\rho$. The structure 1 having a specific flexural rigidity in the above range achieves both the lightness and high rigidity.

The structure 1 has a flexural modulus Ec of preferably 3 GPa or more, further preferably 6 GPa or more. The structure 1 having a flexural modulus Ec of less than 3 GPa is not preferable because it causes a limitation on a range of being used as the structure 1. The structure 1 preferably has a flexural modulus Ec with isotropy to facilitate designing of the structure 1. An upper limit of the flexural modulus Ec is not set. In the structure 1 containing the reinforced fibers 3 and the resin 2, however, the upper limit can be generally a value calculated from the elastic moduli of the constituent components of the structure 1, i.e., the reinforced fibers 3 and the resin 2. As regards the structure 1 of the present invention, either when the structure 1 is used alone or when the structure 1 is used in combination with another member, the member is designed using the flexural modulus Ec of the structure itself, and a flexural modulus of 5 GPa suffices for practical use.

The structure 1 of the present invention has a density $\rho$ in a range of 0.01 g/cm$^3$ or more and 1.0 g/cm$^3$ or less. The structure 1 having a density $\rho$ of more than 1.0 g/cm$^3$ is not preferable because it means an increase in mass of the structure 1 formed, resulting in causing an increase in mass of a product produced. Although depending on the reinforced fibers 3 and the resin 2 used, the density $\rho$ of the structure 1 is 0.01 g/cm$^3$ or more from a viewpoint of retaining the mechanical properties of the structure 1. The structure 1 of the present invention preferably has a density of 0.01 g/cm$^3$ or more and 0.8 g/cm$^3$ or less from a viewpoint of lightness, either when the structure 1 is used alone or when the structure 1 is used in combination with another member.

In the present invention, it is possible to employ a sandwich structure attained by using the structure 1 or a structure precursor as a core layer and using as a skin layer an intermediate sheet material obtained by impregnating continuous reinforced fibers with resin, in a range without impairing the features of the present invention. Here, the "continuous reinforced fibers" are reinforced fibers that at least unidirectionally continue at a length of 100 mm. An aggregate including a number of such fibers unidirectionally aligned, or a reinforced fiber bundle continues over the entire length of the sandwich structure. Examples of a form of the intermediate sheet material formed of the continuous reinforced fibers include a cloth formed of a reinforced fiber bundle including a number of continuous reinforced fibers, a reinforced fiber bundle (unidirectional fiber bundle) including a number of continuous reinforced fibers unidirectionally aligned, and a unidirectional cloth formed of the unidirectional fiber bundle. The reinforced fibers may be formed of a plurality of fiber bundles having the identical form or formed of a plurality of fiber bundles having different forms. The number of the reinforced fibers forming one reinforced fiber bundle is usually 300 to 48,000. The number of the reinforced fibers, however, is preferably 300 to 24,000, more preferably 1,000 to 12,000 in consideration of manufacturing of a prepreg or manufacturing of a cloth.

When the continuous reinforced fibers are used, a form of laminating the reinforced fibers while changing the direction of the reinforced fibers is preferably used to control the flexural modulus of the structure 1. Particularly, in order to efficiently increase the elastic modulus and the strength of the sandwich structure, it is preferable to use continuous reinforced fibers (referred to as UD) obtained by unidirectionally arranging fiber bundles and to laminate the reinforced fibers while changing the orientation direction of the reinforced fibers.

Subsequently described is a method for manufacturing a processed product according to the first embodiment of the present invention.

The first embodiment of the present invention is a method for manufacturing a processed product, the method including performing cutting processing by bringing a following structure 1-1 into contact with a processing tool. The structure 1-1 contains the reinforced fibers 3, the resin 2, and the voids 4 and has a density in a range of 0.01 to 1 g/cm$^3$ and a compression modulus in a range of 0.2 to 20 GPa.

In the first embodiment of the present invention, the "cutting processing" is a process of exerting physical acting force on a constituent material (structure 1-1) through a tool (processing tool) formed of a material having a certain degree or more of hardness, to separate and remove a part of the constituent material while making the constituent material into a processed product having, for example, a dimension, a shape, and a surface state that are aimed. Examples of the cutting processing include band sawing, jig sawing, diamond sawing, blade sawing, wire sawing, diamond grinding, shearing, lathe processing, end milling, drilling, and water-jet processing. Diamond sawing or diamond grinding is preferable from a viewpoint of less tool wear, that is, tool durability. End milling is preferably used from a viewpoint of easy three-dimensional-shape cutting processing, and water-jet processing is preferably used from a viewpoint of less thermal influence by processing heat during cutting.

The structure 1-1 has a compression modulus in a range of 0.2 GPa or more and 20 GPa or less from a viewpoint of performing the cutting processing. During the cutting processing, vibration and pressure are locally applied to a processed portion of the structure 1-1. The structure 1-1 has a compression modulus of 0.2 GPa or more and 20 GPa or less not to allow the processed portion of the structure 1-1 to be broken larger than a desired cut region and to allow the processed portion to maintain a shape and undergo precise processing during fine processing for, for example, a thin rib, a narrow groove, and a small-diameter hole. The compression modulus of the structure 1-1 is measured according to ISO-844: 2004. The structure 1-1 having a compression modulus of less than 0.2 GPa is too soft to undergo fine processing. On the other hand, the structure 1-1 having a compression modulus of more than 20 GPa accelerates, for its excessively high rigidity, wear of a processing tool.

The structure 1-1 only has to have a compression modulus of 0.2 GPa or more and 20 GPa or less for at least one direction. The structure 1-1 having anisotropy, however, preferably has a compression modulus of 0.2 GPa or more and 20 GPa or less for both an in-plane direction and an out-of-plane direction. Although depending on the types of the resin 2 and the reinforced fibers 3 used, the structure 1-1 has a compression modulus of more preferably 0.2 GPa or more and 8 GPa or less, particularly preferably 0.4 GPa or more and 8 GPa or less from a viewpoint of fulfilling lightness and high rigidity of a processed product. The "in-plane direction" is defined as the orientation direction of the reinforced fibers 3 that is measured on the basis of the observation on the vertical section to the plane direction of the structure 1-1 and is the XY direction in Fig. 2. The out-of-plane direction is defined as a direction perpendicular to the in-plane direction and is the Z direction in Fig. 2. Here, the orientation direction means a length direction of the reinforced fibers 3.

During performing the cutting processing, heat is sometimes locally generated on a processed portion of the structure 1-1 through contact of a tool with the processed portion. The processed portion efficiently generates heat and softens the resin 2 to reduce cut resistance and thus enable prevention of unnecessary heat generation and melting near the processed portion. Therefore, the structure 1-1 more preferably has a specific heat of 0.1 cal/(g·K) or more and 0.25 cal/(g·K).

Subsequently described is a method for manufacturing a processed product according to the second embodiment of the present invention.

The second embodiment of the present invention is a method for manufacturing a processed product, the method including performing fusing processing on a following structure 1-2. The structure 1-2 contains the reinforced fibers 3, the resin 2, and the voids 4 and has a density in a range of 0.01 to 1 g/cm$^3$ and a specific heat in a range of 0.05 to 0.50 cal/(g·K).

In the second embodiment of the present invention, the "fusing processing" is a process of giving a constituent material (structure 1-2) heat through a substance or an object capable of giving a target object a certain amount or more of heat, to heat-melt and remove a part of the constituent material while making the constituent material into a processed product having, for example, a dimension, a shape, and a surface state that are aimed. Examples of the fusing processing include laser processing, wire electric discharge processing, and "shearing with a heated blade." Laser processing or wire electric discharge processing is preferable from a viewpoint of less tool wear because it is performed in noncontact with the constituent material.

When the fusing processing is performed, the structure 1-2 has a specific heat in the range of 0.05 cal/(g·K) or more and 0.50 cal/(g·K) or less. A fusing-processed portion of the structure 1-2 is locally given heat. On the other hand, giving heat for a long time during fusing processing transfers heat to the resin 2 near the processed portion to cause a wide range of melting. The structure 1-2 needs to be efficiently fused in a short time not to allow the processed portion of the structure 1-2 to be melted and deformed larger than a desired processed region and to allow the processed portion to maintain a shape and undergo precise processing during fine processing for, for example, a thin rib, a narrow groove, and a small-diameter hole. Accordingly, the structure 1-2 has a specific heat in the range of 0.05 cal/(g·K) or more and 0.50 cal/(g·K) or less. The structure 1-2 having a specific heat of less than 0.05 cal/(g·K) is excessively heated to melt peripheral resin. On the other hand, the structure 1-2 having a specific heat of more than 0.50 cal/(g·K) is less likely to be heated to prolong the heating time and thus melt peripheral resin. The structure 1-2 more preferably has a specific heat of 0.1 cal/(g·K) or more and 0.25 cal/(g·K) or less to perform more precise and efficient heating and fusing.

Among the types of fusing processing described above, for example, shearing with a heated blade is a processing method for performing fusing by giving the structure 1-2 heat of a heated tool by bringing the heat into contact with the structure 1-2. The structure 1-2 preferably has a compression modulus of 0.2 GPa or more and 20 GPa or less not to allow the processed portion of the structure 1-2 to be broken larger than a desired cut region and to allow the processed portion to maintain a shape and undergo precise processing during processing, and the structure 1-2 has a compression modulus of more preferably 0.2 GPa or more and 8 GPa or less, particularly preferably 0.4 GPa or more and 8 GPa or less from a viewpoint of fulfilling lightness and high rigidity. The compression modulus of the structure 1-2 is measured according to ISO-844: 2004.

The cutting processing and the fusing processing melt the resin 2 of the processed portion to be flown to block the voids 4 on a processed end surface and thus eliminate the voids 4 on the processed end surface, making the processed end surface only contain only the reinforced fibers 3 and the resin 2. The processing sometimes reduces, in a range of 0 mm or more and 0.3 mm or less vertically from the processed end surface, the content of the voids 4 to a range of 0 vol% or more and less than 80 vol%. A change in content of the voids 4 at the end surface of a processed product to such a range improves the surface roughness of the end surface and improves, for a rise in volume content of the resin 2, the mechanical properties of the end surface. In addition, the voids 4 on the end surface are blocked with the resin 2 by the processing to prevent water absorption from the end surface, so that an effect of, for example, improving a waterproof property and coatability is also expected.

A processed product according to the present invention, that is, processed products that are formed by performing the processing on the structure 1-1 of the first embodiment and the processing on the structure 1-2 of the second embodiment preferably has a surface roughness (Rz) of the end surface in a range of 5 μm or more and 50 μm or less. The processed product having a surface roughness (Rz) of the end surface of more than 50 μm causes a defect such as coating unevenness in a post-process such as coating of the processed product.

The processed product according to the present invention that is formed by performing the cutting processing on the structure 1-1 or by performing the fusing processing on the structure 1-2 preferably at least contains a region having a minimum thickness value of 10 mm or less that is measured perpendicular to an end surface at any point on the end surface formed by the processing. In reducing weight of the processed product, a protrusion such as a rib largely contributes to multi-functionalization, reduction of weight, or attainment of high rigidity, in terms of configuration designing. When a rib having a thickness and/or width of 5 mm or less is formed on the processed product by the method according to the present invention, the processed product preferably includes a region having a minimum thickness value of 5 mm or less, further 3 mm or less that is measured perpendicular to an end surface at any point on the end surface formed by the processing.

In the present invention, the structure 1-1 or the structure 1-2 is processed to form at least one hole on the processed product and a diameter of the hole is preferably 10 mm or less. Processing of making a small-diameter hole for a mechanical joint such as a bolt or a rivet contributes to reduction of weight and size of the processed product. It is possible to provide a less fit-tolerance small diameter on the processed product according to the present invention that is obtained by processing the structure 1-1 or the structure 1-2. Further, preferred is the processed product having at least one 5-mm or less diameter hole formed thereon, further preferred is the processed product having at least one 3-mm or less diameter hole formed thereon, from a viewpoint of reduction of size.

In the present invention, the structure 1-1 or 1-2 is preferably processed to form a groove portion having an average width of 10 mm or less. In the processed product obtained by processing the structure 1-1, it is possible to form a narrow groove such as a slit on the structure 1-1, and the processing is capable of forming a groove having an average width of 10 mm or less. Further, preferred is the processed product on which is formed a groove having an average width of 5 mm or less from a viewpoint of reduction of size. More preferred is the processed product on which is formed a groove having an average width of 3 mm or less.

It is possible to use the processed product for, for example, an electric or electronic device component such as "a personal computer, a display, office automation equipment, a portable phone, a portable information terminal, PDA (personal digital assistance such as an electronic organizer), a video camera, acoustic equipment, an optical apparatus, an audio, an air conditioner, lighting equipment, an amusement article, a toy, a housing for, for example, other home electric appliances, a tray, a chassis, an interior member, or a case thereof," "various members, various frames, various hinges, various arms, various axles, various wheel bearings, or various beams," an outer plate or a body component such as "a hood, a roof, a door, a fender, a trunk lid, a side panel, a rear end panel, a front body, an under body, various pillars, various members, various frames, various beams, various supports, various rails, or various hinges," an exterior component such as "a bumper, a bumper beam, a mall, an under cover, an engine cover, a current plate, a spoiler, a cowl louver, or an aero part," an interior component such as "an instrument panel, a sheet frame, a door trim, a pillar trim, a handle, or various modules," a structural component for an automobile or two-wheel vehicle such as "a motor component, a CNG tank, or a gasoline tank," a component for automobile or two-wheel vehicle such as "a battery tray, a head lamp support, a pedal housing, a protector, a lamp reflector, a lamp housing, a noise shield, or a spare tire cover," a building material such as "an in-wall member for a noise barrier wall or a soundproof wall," an aircraft component such as "a landing gear pod, a winglet, a spoiler, an edge, a ladder, an elevator, a fairing, a rib, a sheet, or a body for a small unmanned aircraft," and a medical component such as "an artificial limb, a protector, a supporter, a medical device, or a shock absorber." The processed product obtained by the manufacturing method according to the present invention is preferably used for an automobile interior or exterior part, an electric or electronic device housing, a bicycle, a structure material for sport goods, an aircraft interior material, a transport box, and a building material, from a viewpoint of mechanical properties. In particular, the composite structure is especially suitable for a module member consisting of a plurality of components.

EXAMPLES

Hereinafter, the present invention is described in further detail by way of examples.

(1) Density of reinforced fibers pf

A density of the reinforced fibers pf was measured according to a liquid substitution method as the A method in JIS R7603 (1999).

(2) Density of resin sheet pr

A density of a resin sheet pr was measured according to a water substituted method as the A method in JIS K7112 (1999).

(3) Volume content of reinforced fibers in structure Vf

After a mass of the structure Ws was measured, the structure was heated in air at 500°C for 30 minutes to burn off its resin component, a mass of the remaining reinforced fibers Wf was measured, and the volume content of the reinforced fibers was calculated by the following formula.

$$Vf \ (vol\%) = (Wf/\rho f)/\{Wf/\rho f + (Ws - Wf)/\rho r\} \times 100$$

pf: density of reinforced fibers (g/cm$^3$)
pr: density of resin (g/cm$^3$)

(4) Flexural test for structure

Test pieces were cut out from the structure and a flexural modulus Ec was measured according to the ISO178 method (1993). The test pieces were produced by cutting the structure in four directions at 0°, +45°, -45°, and 90°, with any direction defined as 0°, each direction had a number of measured pieces of 5 (n = 5), and an arithmetic average value was defined as an flexural modulus Ec. Used as a measuring device was an "INSTRON (registered trademark)" 5565 type universal material testing machine (manufactured by INSTRON JAPAN Co., Ltd.). The specific flexural rigidity of the structure was calculated from the obtained result by the following formula.

$$Specific \ flexural \ rigidity = Ec^{1/3}/\rho$$

(5) Density of structure ρ

A test piece was cut out from the structure and the apparent density of the structure was measured with reference to JIS K7222 (2005). The dimension of the test piece was 100-mm square. The length, width, and the thickness of each of the test pieces were measured by a micrometer, and a volume V of the test piece was calculated from the obtained values. In addition, a mass M of the cut-out test piece was measured by an electronic balance. The obtained mass M and volume V were substituted in the following formula to calculate a density ρ of the structure.

$$\rho \ [\mathrm{g/cm}^3] \ = \ 10^3 \ \times \ \mathrm{M} \ [\mathrm{g}]/\mathrm{V} \ [\mathrm{mm}^3]$$

(6) Volume content of voids in structure

A 10-mm square test piece was cut out from the structure, a section of the test piece was observed with a scanning electron microscope (SEM) (S-4800 type manufactured by Hitachi High-Technologies Corporation), and the surface of the structure was imaged at 10 locations with an equal interval at a magnification of 1000 times. A void area $A_a$ in each of the images was obtained. A percentage of the voids was calculated by dividing the void area $A_a$ by the area of the entire image. The volume content of the voids in the structure was obtained by an arithmetic average of percentages of the voids at a total of 50 locations, 10 locations in each of 5 test pieces. In order to determine cases of the structure different in percentage of the voids between a portion from the surface to a thickness-wise middle position and the remaining portion, the volume content of the voids is calculated for each of the 10 locations imaged with an equal interval, and the locations were classified into those having a volume content of the voids in a range of 0 vol% or more and less than 10 vol% and those having a volume content of the voids of 10 vol% or more and 99 vol% or less.

(7) Volume content of resin in structure

The volume content of the resin was obtained as a value derived by subtracting from 100 vol% a sum of the volume contents of the reinforced fibers and the voids obtained above.

(8) Coating thickness of resin coating reinforced fibers

The structure was cut out into a 10-mm square test piece, a section of the test piece was observed with a scanning electron microscope (SEM) (S-4800 type manufactured by Hitachi High-Technologies Corporation), and any 10 locations were imaged at a magnification of 3000 times. The coating thickness of the resin coating the reinforced fibers was measured at any 50 locations showing cut sections of the reinforced fibers in the obtained images. An arithmetic average value of the measurement results at the 50 locations is used as the thickness of the resin coating the reinforced fibers.

(9) Surface roughness of end surface of processed product (Rz)

A surface roughness of the end surface of the processed product (Rz) was measured according to JIS B0601: 2001.

(10) Specific heat of structure

The specific heat of the structure was measured according to ISO-11357-4: 2014.

(11) Compression modulus of structure

The compression modulus of the structure was measured according to ISO-844: 2004.

(12) Weight of integrated molded article (excluding metal portion)

The weight of the integrated molded article (excluding a metal portion) was measured by an electronic balance (GX-2000R from Kensei Co., LTD.).

(13) Coatability

As the coatability, the processed product was evaluated for its coating, by the following three-grade subjective assessment.
○: having homogeneous coated surface without unevenness
Δ: having a mostly good coated surface with unevenness such as locally thick color
×: poor with much unevenness
The following materials were used in the following examples and comparative examples.

[Carbon fibers A]

A copolymer containing polyacrylonitrile as a main component was subjected to spun processing, calcined processing, and surface oxidation treatment processing, and a total of 12,000 single yarns were obtained as continuous carbon fibers. The properties of the continuous carbon fibers were as follows.
Single fiber diameter: 7μm
Density: 1.8 g/cm$^3$
Tensile strength: 4600 MPa
Tensile elastic modulus: 220 GPa

[PP resin]

A resin sheet was produced that was formed of 80 mass% of unmodified polypropylene resin ("Prime Polypro" (registered trademark) J105G manufactured by PRIME POLYMER Co., Ltd.) and 20 mass% of acid-modified polypropylene resin ("ADMER" QB510 manufactured by Mitsui Chemicals, Inc.) with a weight per unit area of 100 g/m$^2$. The obtained resin sheet had a weight per unit area of 100 g/m$^2$, a density of 0.92 g/cm$^3$, a melting point of 165°C, and a decomposition start temperature of 298°C.

[Fiber-reinforced mat A]

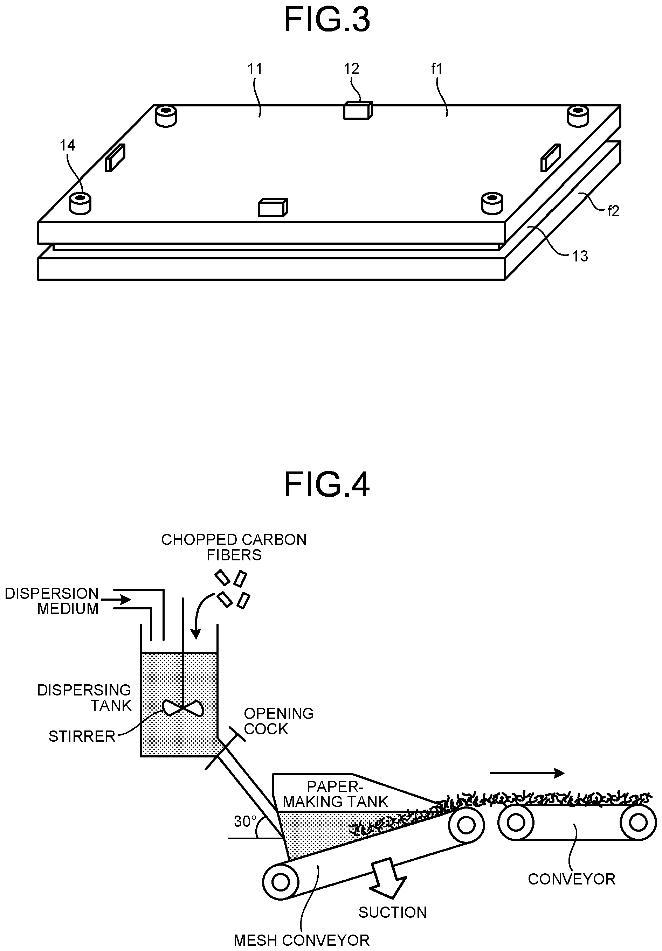

The carbon fibers A were cut with a strand cutter at 6 mm to give chopped carbon fibers. A dispersion liquid formed of water and a surfactant (polyoxyethylene lauryl ether (trade name) manufactured by NACALAI TESQUE, INC.) at a concentration of 0.1 mass% was prepared, and a fiber-reinforced mat was manufactured using the dispersion liquid and the chopped carbon fibers and using the device for manufacturing a fiber-reinforced mat shown in Fig. 4. The manufacturing device shown in Fig. 4 includes, as a dispersing tank, a 1000-mm diameter cylinder-shaped container having an opening cock at a lower portion of the container, and includes a linear transport part (inclination angle: 30°) connecting the dispersing tank to a paper-making tank. A stirrer is attached to an opening on an upper surface of the dispersing tank, and it is possible to charge the chopped carbon fibers and the dispersion liquid (dispersion medium) through the opening into the dispersing tank. The paper-making tank includes a mesh conveyor having a 500-mm wide paper-making surface at the bottom and has the mesh conveyor thereof connected to a conveyor capable of delivering a carbon fiber substrate (paper-making substrate). Paper making was performed with the concentration of the carbon fibers in the dispersion liquid set at 0.05 mass%. The carbon fiber substrate produced by the paper making was dried in a dry furnace at 200°C for 30 minutes to give a fiber-reinforced mat A. The weight per unit area of the mat was 50 g/m$^2$.

[PP compound]

The carbon fibers A and the PP resin were compounded using a twin-screw extruder (TEX-30α manufactured by THE JAPAN STEEL WORKS, LTD.) to manufacture injection molding pellets (PP compound) having a fiber content of 30 wt%.

(Example 1)

A laminate was produced by layering 9 laminated products obtained by disposing the fiber-reinforced mat A as the fiber-reinforced mat and the PP resin as the resin sheet in an order of [resin sheet/fiber-reinforced mat/resin sheet/fiber-reinforced mat/resin sheet/fiber-reinforced mat/resin sheet/fiber-reinforced mat/fiber-reinforced mat/resin sheet/fiber-reinforced mat/resin sheet/fiber-reinforced mat/resin sheet/fiber-reinforced mat/resin sheet]. Next, the laminate was subjected to the following steps (I) to (V) to give a structure. The obtained structure was confirmed, through section observation, to have voids with the reinforced fibers served as columnar supporting bodies. Table 1 shows the properties of the obtained structure (a rectangular body having a length of 300 mm, a width of 210 mm, and a thickness of 30 mm).

(I) The laminate is disposed in a press-molding mold cavity that has been preliminarily heated at 230°C and the molds are closed.
(II) Next, the molds are retained for 120 seconds and then further retained for 60 seconds while pressed at a pressure of 3 MPa.
(III) After the step (II), the mold cavity is opened and a metal spacer is inserted at an end of the cavity to adjust the thickness of an obtained structure to 30.6 mm.
(IV) Thereafter, the mold cavity is closely closed again, and the molds are cooled to a cavity temperature of 50°C while the pressure is retained.
(V) The molds are opened and a structure is extracted.

The structure was subjected to cutting processing with an end mill to manufacture a processed product 11 having the shape shown in Fig. 3. The processed product 11 had a rib 12 and a boss 14 formed on an upper surface f1 thereof, with the rib having a width of 30 mm, a height of 5 mm, and a thickness of 10 mm and the boss having an outer diameter of 20 mm, an inner diameter of 10 mm and a height of 10 mm, and the processed product 11 had a groove portion 13 formed on a side surface f2 thereof, with the groove portion having a width of 5 mm and a depth of 15 mm. No voids were observed on the end surface subjected to the cutting processing with an end mill, and the processed end surface only contained the reinforced fibers and the resin and had a good cut end surface. The processed product was subjected to coating and gave a good coated surface without unevenness. Further, with the processed product 11 used as a first member, the processed product 11 was inserted into an injection molding mold such that the groove portion 13 became a joint surface, while the PP compound was subjected to injection molding to mold a second member, to give an integrated molded article. The obtained integrated molded article had sufficient joint strength, was light, and allowed its attachment to another metal member, with the rib 12 and the boss 14 used as joints. Table 3 shows the properties of the processed product 11 according to Example 1.

(Example 2)

A structure was obtained in the same manner as in Example 1 using the same fiber-reinforced mat and resin sheet as in Example 1. Table 1 shows the properties of the obtained structure. In the same manner as in Example 1, the structure was subjected to cutting processing with an end mill to give a processed product on which were formed a rib having a width of 30 mm, a height of 5 mm, and a thickness of 15 mm, a groove portion having a width of 7 mm and a depth of 15 mm, and a boss having an outer diameter of 20 mm, an inner diameter of 10 mm, and a height of 10 mm. No voids were observed on the processed end surface of the processed product, and the processed end surface only contained the reinforced fibers and the resin. The processed end surface had a good cut end surface and had excellent coatability. With the processed product used as a first member, the PP compound was, in the same manner as in Example 1, subjected to injection to be integrated with the processed product, with the groove portion used as a joint end surface. The obtained integrated molded article had sufficient joint strength. In the same manner as in Example 1, the integrated molded article allowed its attachment to another metal member, with the rib and the boss used as joints. Table 3 shows the properties of the processed product according to the present example.

(Example 3)

A laminate was obtained in the same manner as in Example 1 using the same fiber-reinforced mat and resin sheet as in Example 1. Next, the laminate was subjected to the following steps (I) to (VI) to give a structure. Table 1 shows the properties of the obtained structure.
The structure was subjected to the same end milling as in Example 1, to give a processed product on which were formed a rib having a width of 30 mm, a height of 5 mm, and a thickness of 10 mm, a groove portion having a width of 5 mm and a depth of 15 mm, and a boss having an outer diameter of 20 mm, an inner diameter of 10 mm, and a height of 10 mm. No voids were observed on the processed end surface of the processed product, and the processed end surface only contained the reinforced fibers and the resin. The processed end surface was subjected to coating and found to have generated local unevenness of paint but have mostly good coatability.
With the processed product used as a first member, the PP compound was, in the same manner as in Example 1, subjected to injection to be integrated with the processed product, with the groove portion used as a joint end surface, thus being capable of giving an integrated molded article. The obtained integrated molded article had sufficient joint strength. Table 3 shows the properties of the processed product according to the present example.

(I) The laminate is disposed in a press-molding mold cavity that has been preliminarily heated at 230°C and the molds are closed.

(II) Next, the molds are retained for 120 seconds and then further retained for 60 seconds while pressed at a pressure of 3 MPa.

(III) After the step (II), the mold cavity was opened and a spacer having a thickness of 16.2 mm was inserted at an end of the cavity, followed by retention for 20 seconds.

(IV) Thereafter, adjustment is performed to give a structure having a thickness of 30.6 mm.

(V) Thereafter, the mold cavity is closely closed again, and the molds are cooled to a cavity temperature of 50°C while the pressure is retained.

(VI) The molds are opened and a structure is extracted.

(Example 4)

A structure was obtained in the same manner as in Example 1 using the same fiber-reinforced mat and resin sheet as in Example 1. Table 1 shows the properties of the obtained structure. The structure was subjected to cutting processing with an electric jig saw to give a processed product on which were formed a rib having a width of 30 mm, a height of 5 mm, and a thickness of 10 mm and a groove portion having a width of 5 mm and a depth of 15 mm. No voids were observed on the processed end surface of the processed product, and the processed end surface only contained the reinforced fibers and the resin and had a good cut end surface. The processed product was subjected to coating and found to have generated local unevenness of paint but have mostly good coatability.

With the processed product used as a first member, the PP compound was, in the same manner as in Example 1, subjected to injection to be integrated with the processed product, with the groove portion used as a joint end surface, thus being capable of giving an integrated molded article. The obtained integrated molded article had sufficient joint strength. Table 3 shows the properties of the processed product according to the present example.

(Example 5)

The example was performed under the same conditions as in Example 1 except that the method for processing the structure was laser processing. In the same manner as in Example 1, a processed product can be obtained. No voids were observed on the processed end surface of the processed product, and the processed end surface only contained the reinforced fibers and the resin and had a good cut end surface. The processed product was subjected to coating and found to have good coatability in the same manner as in Example 1 or 2. An integrated molded article including the processed product was also capable of being obtained. The obtained integrated molded article had sufficient joint strength. Table 1 shows the properties of the obtained structure and Table 3 shows the properties of the processed product.

(Example 6)

The example was performed under the same conditions as in Example 2 except that the method for processing the structure was laser processing. In the same manner as in Example 2, a processed product can be obtained. As in Example 5, no voids were observed on the processed end surface, the processed end surface only contained the reinforced fibers and the resin and had good coatability. An integrated molded article including the processed product was also capable of being obtained. The obtained integrated molded article had sufficient joint strength. Table 1 shows the properties of the obtained structure and Table 3 shows the properties of the processed product.

(Example 7)

The example was performed under the same conditions as in Example 3 except that the method for processing the structure was laser processing. In the same manner as in Example 3, a processed product can be obtained. No voids were observed on the processed end surface of the processed product, and the processed end surface only contained the reinforced fibers and the resin. The processed product was subjected to coating and found to have generated local unevenness of paint but have mostly good coatability. An integrated molded article including the processed product was also capable of being obtained. The obtained integrated molded article had sufficient joint strength. Table 2 shows the properties of the obtained structure and Table 4 shows the properties of the processed product.

(Comparative Example 1)

Twenty seven laminated products used in Example 1 were layered to form a laminate, and then a structure was obtained in the same manner as in Example 1 except that the metal spacer was changed to 32.1 mm in the step (IV) of Example 1. Table 2 shows the properties of the obtained structure.

The structure was subjected to cutting processing with an end mill, processing for the same rib, groove portion, and boss was performed under the same conditions as in Example 1, and an integrated molded article was molded with resin for injection. No voids were observed on the processed end surface of the processed product, the processed end surface only contained the reinforced fibers and the resin, and the obtained integrated molded article had sufficient joint strength. Table 4 shows the properties of the obtained processed product.

(Comparative Example 2)

A low-expanded polypropylene sheet "EFCELL" manufactured by Furukawa Electric Co., Ltd. was used as the structure and subjected to processing. Table 2 shows the properties of the structure.

The structure was subjected to cutting processing with an end mill. Formation of a rib, a groove portion, and a boss was attempted under the same conditions as in Example 1 but was failed to break the structure near the processed portion during the processing. Voids derived from the foam were observed on the processed end surface of the processed product. Table 4 shows the properties of the processed product.

(Comparative Example 3)

The example was performed under the same conditions as in Comparative Example 1 except that the method for processing the structure was laser processing. Processing for the same rib, groove portion, and boss was performed under the same conditions as in Example 2, and an integrated molded article was molded with resin for injection. No voids were observed on the processed end surface of the processed product, the processed end surface only contained the reinforced fibers and the resin, and the obtained integrated molded article had sufficient joint strength. Table 1 shows the properties of the obtained structure and Table 2 shows the properties of the processed product.

(Comparative Example 4)

The example was performed under the same conditions as in Comparative Example 2 except that the method for processing the structure was laser processing. Formation of a rib, a groove portion, and a boss was attempted under the same conditions as in Comparative Example 2 but was failed to break the structure near the processed portion during the processing. Voids derived from the foam were observed on the processed end surface of the processed product. Table 2 shows the properties of the structure and Table 4 shows the properties of the processed product.

[Table 1]

| | | | Example 1 | Example 2 | Example 3 | Example 4 | Example 5 | Example 6 |
|---|---|---|---|---|---|---|---|---|
| Structure | Reinforced fibers | - | Fiber-reinforced mat 1 | Fiber-reinforced mat 1 | Fiber-reinforced mat 1 | Fiber-reinforced mat 1 | Fiber-reinforced mat 1 | Fiber-reinforced mat 1 |
| | Resin | - | PP Resin | PP Resin | PP Resin | PP Resin | PP Resin | PP Resin |
| Volume content of reinforced fibers | | Vol% | 6.7 | 6.7 | 6.7 | 6.7 | 6.7 | 6.7 |
| Volume content of resin | | Vol% | 26.6 | 26.6 | 26.6 | 26.6 | 26.6 | 26.6 |
| Volume content of voids | | Vol% | 66.7 | 66.7 | 66.7 | 66.7 | 66.7 | 66.7 |
| Density of structure | | g/cm$^3$ | 0.36 | 0.36 | 0.36 | 0.36 | 0.36 | 0.36 |
| Resin coating periphery of reinforced fibers | | Present or absent | Present | Present | Partially present | Present | Present | Present |
| Coating thickness of resin coating periphery of reinforced fibers | | $\mu$m | 4.8 | 4.8 | 0.5 - 30 With unevenness | 4.8 | 4.8 | 4.8 |
| Flexural modulus (Ec) | | GPa | 8.1 | 8.1 | 2.5 | 8.1 | 8.1 | 8.1 |
| Specific flexural rigidity | | - | 5.58 | 5.58 | 3.23 | 5.58 | 5.58 | 5.58 |
| Out-of-plane compression modulus | | GPa | 0.15 | 0.15 | 0.12 | 0.15 | 0.15 | 0.15 |
| In-plane compression modulus | | GPa | 2.50 | 2.50 | 1.85 | 2.50 | 2.50 | 2.50 |
| Specific heat | | cal/(g•K) | 0.18 | 0.18 | 0.20 | 0.18 | 0.18 | 0.18 |

[Table 2]

| Structure | Reinforced fibers | - | Example 7 | Comparative Example 1 | Comparative Example 2 | Comparative Example 3 | Comparative Example 4 |
|---|---|---|---|---|---|---|---|
| | Reinforced fibers | - | Fiber-reinforced mat 1 | Fiber-reinforced mat 1 | - | Fiber-reinforced mat 1 | - |
| | Resin | - | PP Resin | PP Resin | PP Resin | PP Resin | PP Resin |
| Volume content of reinforced fibers | | Vol% | 6.7 | 19.0 | 0.0 | 19.0 | 0.0 |
| Volume content of resin | | Vol% | 26.6 | 75.8 | 33.3 | 75.8 | 33.3 |
| Volume content of voids | | Vol% | 66.7 | 5.0 | 66.7 | 5.0 | 66.7 |
| Density of structure | | g/cm$^3$ | 0.36 | 1.02 | 0.33 | 1.02 | 0.33 |
| Resin coating periphery of reinforced fibers | | Present or absent | Partially present | Almost completely impregnated | - | Almost completely impregnated | - |
| Coating thickness of resin coating periphery of reinforced fibers | | μm | 0.5 - 30 With unevenness | - | - | - | - |
| Flexural modulus (Ec) | | GPa | 2.5 | 8.5 | 0.2 | 8.5 | 0.2 |
| Specific flexural rigidity | | - | 3.23 | 4.64 | 1.71 | 4.64 | 1.71 |
| Out-of-plane compression modulus | | GPa | 0.12 | Unmeasurable | 0.07 - 0.18 | Unmeasurable | 0.07 - 0.18 |
| In-plane compression modulus | | GPa | 1.85 | Unmeasurable | | Unmeasurable | |
| Specific heat | | cal/(g•K) | 0.20 | 0.21 | 0.23 | 0.21 | 0.23 |

[Table 3]

|  |  | Example 1 | Example 2 | Example 3 | Example 4 | Example 5 | Example 6 |
|---|---|---|---|---|---|---|---|
| Processing method | - | End mill | End mill | End mill | Electricjig saw | Laser | Laser |
| End-surface roughness of processed product (Rz) | μm | 11 | 11 | 56 | 65 | 18 | 18 |
| Coatability | - | ○ | ○ | Δ | Δ | ○ | ○ |
| Rib/hole/groove processing | - | Achieved | Achieved | Achieved | Achieved | Achieved | Achieved |
| Weight of integrated molded article (excluding metal portion) | g | 421 | 446 | 422 | 423 | 422 | 447 |

[Table 4]

|  |  | Example 7 | Comparative Example 1 | Comparative Example 2 | Comparative Example 3 | Comparative Example 4 |
|---|---|---|---|---|---|---|
| Processing method | - | Laser | End mill | End mill | Laser | Laser |
| End-surface roughness of processed product (Rz) | μm | 67 | 75 | - | 68 | - |
| Coatability | - | Δ | × | - | × | - |
| Rib/hole/groove processing | - | Achieved | Achieved | Unachieved | Achieved | Unachieved |
| Weight of integrated molded article (excluding metal portion) | g | 423 | 801 | - | 805 | - |

[Study]

The present examples clarified that as regards the structure that contains the voids, the fibers, and the structure and has a specific density, subjecting the structure further having a compression modulus in a specific range to cutting processing or subjecting the structure further satisfying a specific heat in a specific range to fusing processing enables fine processing to improve the properties of the processed product. Examples 2 and 6 demonstrated that the integrated molded article that includes the processed product obtained through the fine processing improves its properties (lightness), and Examples 3 and 7 demonstrated that sufficient coating of the fibers improves end-surface precision. Example 4 demonstrated that selection of a processing method enables improvement in end-surface precision. On the other hand, Comparative Examples 1 and 3 gave structures having less voids and a large resin proportion, to cause a problem of a conventional resin structure, i.e., a remarkable decrease in end-surface precision by melted resin and also generate many burrs during the processing. This decrease in end-surface precision generated many puddles of paint in coating of the processed product, to make the coatability poor. Comparative Examples 2 and 4 gave, for absence of the reinforced fibers, structures having insufficient rigidity, so that the fine processed part was broken due to strain generated during the fine-portion processing to make it impossible to implement the fine processing.

INDUSTRIAL APPLICABILITY

According to the present invention, it is possible to provide a processed product having excellent lightness, compression property, and processing precision. According to the present invention, it is also possible to provide a processed product having excellent lightness and impact-property precision.

DESCRIPTION OF REFERENCE SIGNS

| 1: | Structure |
|---|---|
| 2: | Resin |
| 3: | Reinforced fiber |
| 4: | Void |
| 9a to 9f: | Single filament |
| 11: | Processed product |
| 12: | Rib |
| 13: | Groove portion |
| 14: | Boss |

**Claims**

1. A method for manufacturing a processed product, the method comprising processing a structure,
   the structure containing reinforced fibers, resin, and voids,
   the structure having a density in a range of 0.01 to 1 g/cm$^3$,
   the structure having a compression modulus in a range of 0.2 to 20 GPa, and
   the processing being cutting processing performed by bringing the structure into contact with a processing tool.

2. A method for manufacturing a processed product, the method comprising processing a structure,
   the structure containing reinforced fibers, resin, and voids,
   the structure having a density in a range of 0.01 to 1 g/cm$^3$,
   the structure having a specific heat in a range of 0.05 to 0.50 cal/(g·K), and
   the processing being fusing processing performed by fusing the structure.

3. The method for manufacturing a processed product according to claim 2, wherein the structure has a compression modulus in a range of 0.2 to 20 GPa.

4. The method for manufacturing a processed product according to any of claims 1 to 3, wherein an end surface formed by processing the structure has a surface roughness (Rz) in a range of 5 $\mu$m or more and 50 $\mu$m or less.

5. The method for manufacturing a processed product according to any of claims 1 to 4, wherein
   the structure has a volume content of the reinforced fibers in a range of 0.5 vol% or more and 55 vol% or less, a volume content of the resin in a range of 2.5 vol% or more and 85 vol% or less, and a volume content of the voids in a range of 10 vol% or more and 97 vol% or less.

6. The method for manufacturing a processed product according to any of claims 1 to 5, wherein the structure has a density in a range of 0.1 to 0.8 g/cm$^3$.

7. The method for manufacturing a processed product according to any of claims 1 to 6, wherein the structure has a specific heat in a range of 0.1 to 0.25 cal/(g·K).

8. The method for manufacturing a processed product according to any of claims 1 to 7, wherein in the structure, the reinforced fibers are coated with the resin and the resin coating the reinforced fibers has a coating thickness in a range of 1 $\mu$m or more and 15 $\mu$m or less.

9. The method for manufacturing a processed product according to any of claims 1 to 8, wherein the structure has a specific flexural rigidity in a range of 3 or more and 20 or less, the specific flexural rigidity being represented by $Ec^{1/3} \cdot \rho^{-1}$ with a flexural modulus defined as Ec and a density defined as $\rho$, and the structure has a flexural modulus Ec of 3 GPa or more.

10. The method for manufacturing a processed product according to any of claims 1 to 9, wherein the processed product at least contains a region having a minimum thickness value of 10 mm or less that is measured perpendicular to an end surface at any point on the end surface formed by processing the structure.

11. The method for manufacturing a processed product according to any of claims 1 to 9, wherein the processed product includes at least one hole formed by processing the structure and the hole has a diameter of 10 mm or less.

12. The method for manufacturing a processed product according to any of claims 1 to 9, wherein the processed product includes a groove portion formed by processing the structure and the groove portion has an average width of 10 mm or less.

13. A processed product obtained by processing a structure,
the structure containing reinforced fibers, resin, and voids,
the structure having a volume content of the reinforced fibers in a range of 0.5 vol% or more and 55 vol% or less and a volume content of the voids in a range of 10 vol% or more and 97 vol% or less, and
the processed product having a processed end surface that contains the reinforced fibers and the resin and has a surface roughness (Rz) in a range of 5 $\mu$m or more and 50 $\mu$m or less.

14. The processed product according to claim 13, wherein in the structure, the reinforced fibers are coated with the resin and the resin has a coating thickness in a range of 1 $\mu$m or more and 15 $\mu$m or less.

15. The processed product according to claim 13 or 14, wherein the structure has a compression modulus in a range of 0.2 to 20 GPa.

16. The processed product according to any of claims 13 to 15, wherein the structure has a specific heat in a range of 0.05 to 0.50 cal/ (g·K).

# FIG.1

# FIG.2

(a)

(b)

# FIG.3

# FIG.4

## INTERNATIONAL SEARCH REPORT

| International application No. |
|---|
| PCT/JP2017/045791 |

### A. CLASSIFICATION OF SUBJECT MATTER
Int.Cl. B29C70/04(2006.01)i, C08J5/04(2006.01)i

According to International Patent Classification (IPC) or to both national classification and IPC

### B. FIELDS SEARCHED

Minimum documentation searched (classification system followed by classification symbols)
Int.Cl. B29C70/04-B29C70/56, B29C39/02-B29C39/12, B29C43/02-B29C43/20, C08J5/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2006-076060 A (TORAY INDUSTRIES, INC.) 23 March 2006, fig. 1-2, paragraphs [0008]-[0056] (Family: none) | 1-16 |
| Y | WO 2015/163408 A1 (TEIJIN LTD.) 29 October 2015, paragraphs [0011]-[0147] & JP 2015-231666A & JP 2016-172317A & US 2017/0106606 A1, paragraphs [0016]-[0374] & EP 3135716 A1 & CN 106459436 A | 1-16 |
| Y | JP 2010-179558 A (AISIN CHEM CO., LTD.) 19 August 2010, table 1 (Family: none) | 2-12, 16 |
| Y | JP 2003-231813 A (IDEMITSU PETROCHEMICAL CO., LTD.) 19 August 2003, fig. 1, paragraphs [0004]-[0021] (Family: none) | 8-12, 14-16 |
| Y | JP 2-170844 A (MITSUI TOATSU CHEMICALS, INC.) 02 July 1990, p. 2, upper left column, line 11 to p. 3, lower left column, line 20 (Family: none) | 8-12, 14-16 |
| A | JP 2012-000890 A (MITSUBISHI PLASTICS, INC.) 05 January 2012, fig. 1, paragraphs [0008]-[0066] (Family: none) | 1-16 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 March 2018 (13.03.2018) | 20 March 2018 (20.03.2018) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**EP 3 560 691 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014162873 A
- JP 2002338722 A
- JP 5908188 B